# EUROPEAN PATENT APPLICATION

(11) **EP 1 988 274 A2**
(43) Date of publication of application: **05.11.2008**
(21) Application number: 08464006.9
(22) Date of filing: 24.04.2008
(51) Int. Cl.: F02K 3/077

(54) **Turbojet engine**

(30) Priority: 04.05.2007 RO 200700304
(71) Applicant: Institutul National de Cercetare si Dezvoltare Turbomotoare- Comoti, 061126 Bucuresti (RO)
(72) Inventor: Stanciu, Virgil, Prof. D. Ing., sector 6, Bucuresti (RO); Silivestru, Valentin, Dr. Ing., sector 5, Bucuresti (RO); Gherman, Bogdan, Ing., sector 2, Bucuresti (RO)

(57) **Abstract**

The invention refers to a propulsion system, the tripleflux turbojet, which can be used in the aeronautical industry for aircraft propulsion.
The tripleflux turbojet having a secondary interior fan (2), a stator (1), a primary stator (3), a compressor (4), a intermediary casing (20), a exterior casing (21), a secondary interior working channel (8) and a primary working channel (9), a combustion chamber (5), a turbine (6) with three rotors 6A, 6B, 6C, independent, shafts (15 and 16) mounted in the interior casing (22) of the primary flux and the nozzle (7) having a shaft (14) mounted in the interior casing (22) which spins a fan (13) behind which is mounted a stator (12) and a secondary stator (10) which is mounted in the interior of the channel of the exterior secondary flux (11) delimitated by the body of the exterior casing (18) and the body of the intermediary casing (20).

## Description

The invention refers to a triple flux turbojet engine. This engine can be used in aircraft industry for modem transport in future aircraft propulsion.

Presently are known double flux turbojet engines, patent no. CA887935, formed from a fan positioned in front part of the engine; a compressor formed from two compression units, one for high pressure and one for low pressure; a combustion chamber, a multi stage turbine formed from a high pressure turbine and a low pressure turbine and also a nozzle.

The air which passes through the system is divided in two fluxes with roles and characteristics well defined, the primary flux is where is developed a important component of the system force and also is the place where combustion process takes place;

The disadvantage of the known turbojets are related, firstly, to the high noise pollution produced by them which affects the passengers and people who live around the airports and secondly are not efficient from the fuel consumption point of view.

Surprisingly, it was noticed that the tripleflux turbojet eliminates the disadvantages mentioned before by its constructive solution; in frontal part of the tripleflux turbojet is an ensemble formed from a exterior casing in which are mounted the following: a secondary exterior fan much smaller than the one of the double flux turbojet, which is powered by the turbine, namely the third rotor, through a shaft which is mounted in the body of interior casing of the primary flux and a secondary stator situated in front of the secondary fan, between intermediary casing and exterior casing. Between the two casings, exterior and intermediary, it is formed the working channel, named secondary exterior working channel and which determines the secondary exterior air flux and in which are placed these struts.

In the second casing, named the intermediary casing, it is placed the secondary interior fan, with a structure similar to the secondary exterior fan. The primary fan is powered by the second turbine rotor through a shaft; a primary stator is placed in front of the secondary fan, and is attached to the intermediary casing and the body of the interior casing of the primary flux. Between the intermediary casing and primary flux exterior casing it is formed a working channel, named interior secondary working channel of the interior secondary air flux.

In main part of the engine is placed a central body with a similar structure of a turbojet, where it flows the primary flux of the system and contains: primary flux exterior casing, a compressor, a combustion chamber, a turbine and a nozzle which is attached to the exit cone. The interior casing contains two shafts which spins the fans and also another shaft that connects the compressor (from the primary flux) to first rotor of the turbine. The primary working channel is delimitated by the exterior casing of the primary flux and by the interior casing.

The present invention presents the following advantages: - develops a thrust bigger than the one of the double fan turbojet engine at same gauge; reduce the specific fuel consumption which improves the engine efficiency; substantial reduction of the noise generated by the engine; reduction of the drag coefficient of the engine and of the airplane, due to the fact that the frontal dimension of the engine is much smaller.

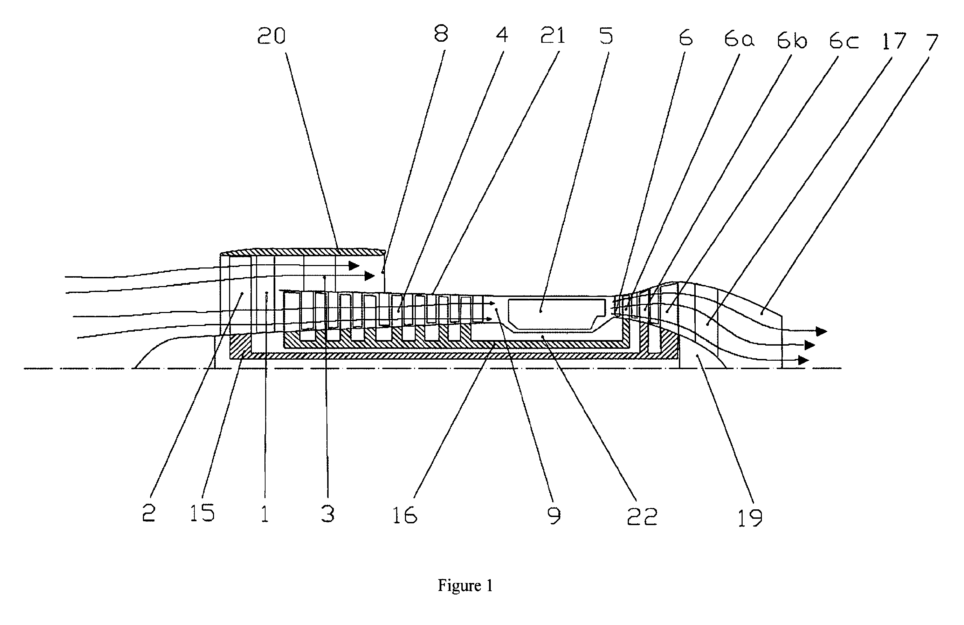

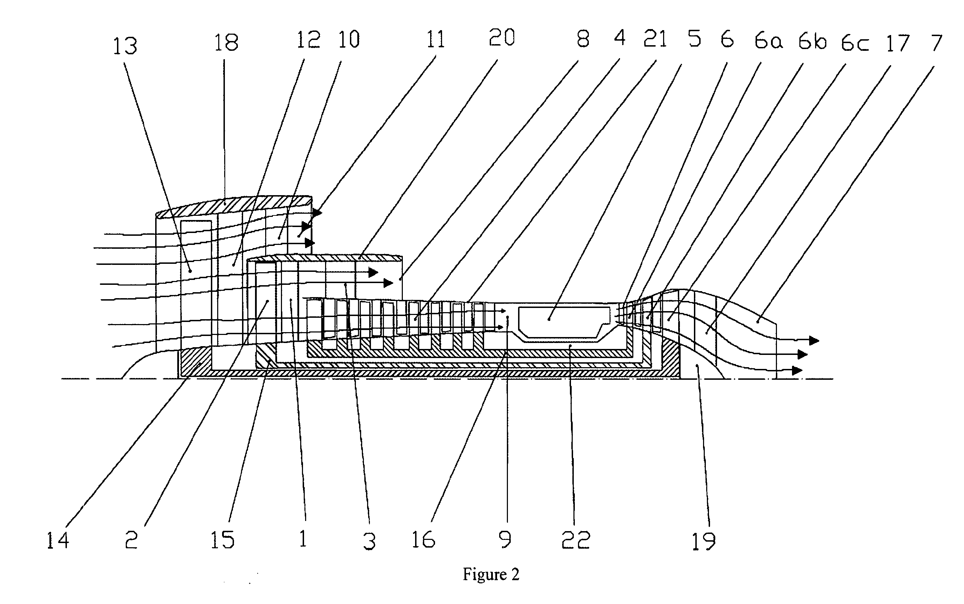

In the following section is given an example of realization of the invention in close connection with the figures 1 and 2 where figure 1 represents an axial section, basic drawing, through the existent doublefan turbojet; figure 2 represents an axial section, basic drawing, through the triple flux turbojet.

From the point of view of the air and burning gases channels, the solution contains a exterior secondary working channel 11; interior secondary working channel (8); primary working channel 9.

The tripleflux turbojet, according to the invention, has an exterior casing 18, profiled at the interior, which contains a secondary exterior fan 13, behind it is placed a stator 12, after that is placed a secondary stator 10 on the secondary exterior working channel 11 and on the secondary interior working channel 8 is mounted a secondary interior fan 2, after this is placed a stator 1, following on the secondary interior working channel 8 it is mounted another stator, primary stator 3, also inside the exterior casing of the primary flux 21 it is mounted a compressor 4 and behind it, bounded by the casing, is the combustion chamber equipped with injectors, after this one is a turbine 6 with three stages 6A, 6B and 6C, independent, behind the turbine is placed a nozzle. On the exterior wall of the intermediary casing body 20 it is mounted a secondary stator 10 of which is attached an exterior casing 18. Between the body of the exterior casing 18 and the body of the interior casing 20 it is formed the secondary exterior working channel 11. From the interior wall of the exterior casing 18 and interior casing of the primary flux 22 it is attached a stator 12, behind it is placed a secondary exterior fan 13 which is connected to the third stage 6C, through a shaft 14. The compressor 4 it is connected to the first turbine stage 6A through a shaft 16 concentric to shaft 14. The secondary interior fan 2 is connected the second turbine stage 6B through a shaft 16 concentric to shaft 15. The primary working channel 9 is delimited by the primary flux exterior casing 21 and by the exterior casing 22. The secondary interior working channel 8 is delimitated by the intermediary casing 20 and by the exterior casing of the primary flux 21 which is concentric to the primary working channel 9 and the secondary exterior working channel 11 is concentric to the secondary interior working channel 8. The combustion chamber 5 is connected to the interior casing of the primary flux 22 and the exterior casing of the primary flux 21, this one collects the compressed air which is mixed with fuel before burning. The nozzle is connected to exterior casing of the primary flux 21 and to the cone 19 in the exit area through a strut 17.
Consequently, in the structure of the tripleflux turbo engine, as opposed to double fan turbojet, enters the following components: secondary exterior fan 13; secondary interior fan 2.

At the tripleflux turbojet, according to the invention, the structure of the fluid fluxes, which participate to the realization of the system thrust, contains a primary flux, between the exterior and interior casings of the primary flux; a secondary interior flux, between intermediary and exterior casings of the secondary interior flux.

An improvement of this engine it is the presence of the secondary exterior fan 13 which offers an improvement of the thrust, 25-30 % more than the dubleflux turbojet at the same gauge. This leads also to a reduction of the specific fuel consumption with 10-15%. Another improvement of this engine is the exhaust nozzle which can lead to a reduction of the noise with 3-4 decibels.

A description of how the engine works is described next. The atmospheric air flux is driven by the fan 13 and goes through the blades of the stator 12, being compressed to a bigger pressure than the atmospheric pressure. A part of the secondary exterior air flux which leaves the stator 12 goes into the secondary stator 10 and the rest is driven by the secondary interior fan 2 and after that goes through stator 1 where is compressed even further, after that a part passes through stator 3 and the rest enters the compressor 4. In compressor 4 the air is compressed at a pressure necessary to combustion. Before entering the combustion chamber the compressed air is mixed with the fuel necessary for combustion. The resulting burned gases from combustion have high temperature and through expansion of these in the turbine it is produced the necessary work of energy to spin the compressor 4, the secondary exterior fan 13 and the secondary interior fan 2. The gases expand also in the nozzle 7 producing, at exit, a jet with a high speed.

The air jet, from the secondary exterior working channel 11 and from the secondary interior working channel 8, is mixed, gradually, and the resulting air jet is mixed with the atmospheric air but also with the burned gases jet that exit from the nozzle 7, fact that leads at substantial reduction of noise produced by the tripleflux turbojet.

## Claims

1. The tripleflux turbojet having a secondary interior fan (2), a stator (1), a primary stator (3), a compressor (4), a intermediary casing (20), a exterior casing (21), a secondary interior working channel (8) and a primary working channel (9), a combustion chamber (5), a turbine (6) with three rotors 6a, 6b, 6c, independent, shafts (15 and 16) mounted in the interior casing (22) of the primary flux and the nozzle (7) **characterized in that that** has a shaft (14) mounted in the interior casing (22) which spins a fan (13) behind which is mounted a stator (12) and a secondary stator (10) which is mounted in the interior of the channel of the exterior secondary flux (11) delimitated by the body of the exterior casing (18) and the body of the intermediary casing (20).
